# EUROPEAN PATENT APPLICATION

(11) **EP 2 821 878 A1**
(43) Date of publication of application: **07.01.2015**
(21) Application number: 12870272.7
(22) Date of filing: 15.03.2012
(51) Int. Cl.: G06F 1/00, G06F 1/16, H01R 11/30

(54) **TABLET PC HAVING NON-INSERTION TYPE PORT AND CRADLE CONNECTED TO SAME**

(30) Priority: 27.02.2012 KR 20120019726
(71) Applicant: Dae Han Special Metal Ind Co., Ltd., Incheon 405-819 (KR)
(72) Inventor: AN, Joon-Bum, Bucheon-si Gyeonggi-do 420-030 (KR)
(74) Representative: Goddar, Heinz J.
(86) International application number: PCT/KR2012/001883
(87) International publication number: WO 2013/129721

(57) **Abstract**

Provided is a tablet personal computer (PC) having a non-insertion type port, the tablet PC including a non-insertion type port to which a non-insertion type connector of a cradle is connected using magnetism and which supplies input signals of a peripheral device connected to a non-insertion type port of the cradle using magnetism to a control unit or which supplies output signals of the control unit to the peripheral device, wherein the non-insertion type port includes: a magnetic coupling member that is formed on a contact surface of a body and comes into surface contact with a magnetic coupling member formed on a contact surface of the non-insertion type connector using magnetism; and a contact terminal that is formed on the contact surface of the body and causes a contact terminal of the non-insertion type connector to come into non-insertion contact with the contact terminal when the magnetic coupling members are coupled to each other using magnetism, thereby enabling reciprocal power supply and data transmission.

## Description

### TECHNICAL FIELD

The present invention relates to a tablet personal computer (PC) and a cradle connected thereto, and more particularly, to a tablet PC having a non-insertion type port, whereby the non-insertion type port is configured at the tablet PC and a non-insertion type connector of a cradle is capable of coming into non-insertion contact with the non-insertion type port using magnetism, and a cradle connected to the tablet PC.

### BACKGROUND ART

In general, an open type port in an exposed state is configured at a lower side of a tablet personal computer (PC), such as iPad™, slate PC™, or Galaxy Tab™, so that a cradle that enables a connection function with a peripheral device, can be connected to the tablet PC through the open type port.

Thus, the peripheral device in which an insertion type connector of the cradle is inserted into and comes into contact with the open type port of the tablet PC and an insertion type connector of the peripheral device is connected to an open type port of the cradle, can be used.

However, since the open type port provided at the lower side of the tablet PC or the open type port provided at the cradle generally has a concave surface shape and the insertion type connector of the cradle and the insertion type connector of the peripheral device generally have convex protrusion shapes, there may be damage or breakage that physical contact states of the connectors become loose and contact states of contact terminals become bad due to reciprocal repetitive contact and separation or the contact terminals of the connectors are bent or crooked in their separation directions during separation.

Also, when the open type port and the insertion type connector are coupled to each other in a reverse direction or unreasonable force is exerted on the open type port and the insertion type connector due to a wrong usage, a printed circuit board (PCB) connected to the contact terminal may be damaged together with damage of the contact terminal. In this case, an economical loss in which the PCB and the contact terminal need to be replaced, may occur.

In addition, since the open type port always has an open state, when foreign substances, such as dust or water, are introduced into the open type port, an unstable connection state may be formed, and aesthetic appeal of the tablet PC may be lowered.

### DETAILED DESCRIPTION OF THE INVENTION

### TECHNICAL PROBLEM

The present invention provides a tablet personal computer (PC) having a non-insertion type port, whereby the non-insertion type port instead of an open type port is configured at the tablet PC and is capable of coming into non-insertion contact with the a non-insertion type connector configured at a cradle using magnetism, and a cradle connected to the tablet PC.

The present invention also provides a tablet PC having a non-insertion type port, whereby a non-insertion type connector of a peripheral device is capable of coming into non-insertion contact with a non-insertion type port configured at a cradle using magnetism, and a cradle connected to the tablet PC.

### TECHNICAL SOLUTION

According to an aspect of the present invention, there is provided a tablet personal computer (PC) having a non-insertion type port, the tablet PC including a non-insertion type port to which a non-insertion type connector of a cradle is connected using magnetism and which supplies input signals of a peripheral device connected to a non-insertion type port of the cradle using magnetism to a control unit or which supplies output signals of the control unit to the peripheral device, wherein the non-insertion type port may include: a magnetic coupling member that is formed on a contact surface of a body and comes into surface contact with a magnetic coupling member formed on a contact surface of the non-insertion type connector using magnetism; and a contact terminal that is formed on the contact surface of the body and causes a contact terminal of the non-insertion type connector to come into non-insertion contact with the contact terminal when the magnetic coupling members are coupled to each other using magnetism, thereby enabling reciprocal power supply and data transmission.

The non-insertion type port may further include a guide that is formed on the contact surface and causes a guide of the non-insertion type connector to be guided so that non-insertion point-contact of the contact terminals can be precisely performed when the magnetic coupling members are coupled to each other using magnetism.

According to another aspect of the present invention, there is provided a cradle that is connected to a tablet personal computer (PC) having a non-insertion type port including a magnetic coupling member and a contact terminal on a contact surface using magnetism, the cradle including a non-insertion type connector that is formed on a contact surface of a body and causes the non-insertion type port to come into non-insertion contact with the non-insertion type connector using magnetism, wherein the non-insertion type connector may include: a magnetic coupling member that is coupled to the magnetic coupling member using magnetism; and a contact terminal that comes into non-insertion contact with the contact terminal when the magnetic coupling members are coupled to each other using magnetism.

When the non-insertion type port includes a guide formed on the contact surface, the non-insertion type connector may further include a guide that is formed on the contact surface of the body and is guided by the guide so that non-insertion point-contact of the contact terminals can be precisely performed when the magnetic coupling members are coupled to each other using magnetism.

The cradle may further include a non-insertion type port that is formed on a contact surface that faces the contact surface to be internally connected to the non-insertion type connector so that power supply and data transmission can be performed, and to cause the non-insertion type connector of the peripheral device to come into non-insertion contact with the non-insertion type port using magnetism, wherein the non-insertion type port may further include: a magnetic coupling member that is formed on the contact surface and comes into surface contact with the magnetic coupling member formed on a contact surface of the non-insertion type connector using magnetism; and a contact terminal that is formed on the contact surface and causes a contact terminal of the non-insertion type connector to come into non-insertion contact with the contact terminal when the magnetic coupling members are coupled to each other using magnetism, thereby enabling reciprocal power supply and data transmission.

The non-insertion type port may further include a guide that is formed on the contact surface and causes a guide of the non-insertion type connector to be guided so that non-insertion point-contact of the contact terminals can be precisely performed when the magnetic coupling members are coupled to each other using magnetism.

### DESCRIPTION OF THE DRAWINGS

FIG. 1 is a perspective view of a tablet personal computer (PC) having a non-insertion type port and a cradle connected to the tablet PC according to an exemplary embodiment of the present invention.
FIG. 2 illustrates a state in which the tablet PC illustrated in FIG. 1 is coupled to the cradle of FIG. 1.
FIG. 3 illustrates the cradle of FIG. 1 and a peripheral device connected thereto.
FIG. 4A through 4G illustrate non-insertion type ports and non-insertion type connectors connected to the non-insertion type ports of the tablet PC, the cradle, and the peripheral device illustrated in FIGS. 1 through 3, according to various embodiments of the present invention.
FIGS. 5A through 5C illustrate contact terminals disposed on printed circuit boards (PCBs) of the non-insertion type ports and the non-insertion type connector illustrated in FIGS. 4A through 4G, according to an embodiment of the present invention.

### MODE OF THE INVENTION

Hereinafter, the present invention will be described in detail by explaining exemplary embodiments of the invention with reference to the attached drawings.

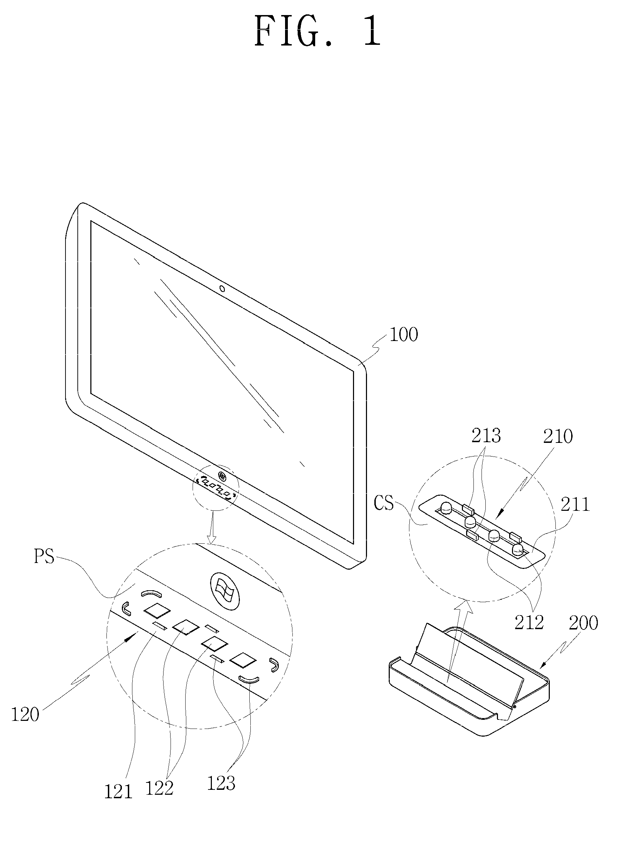

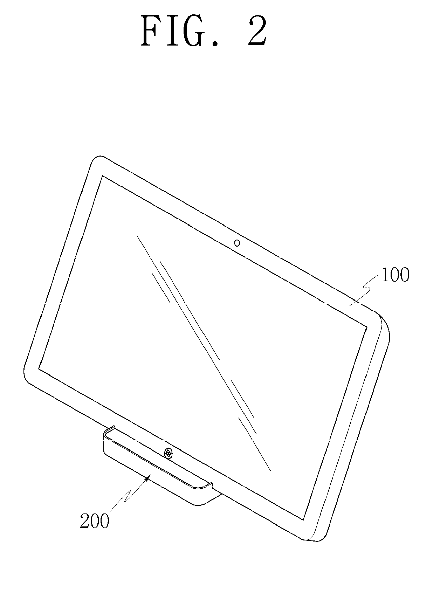

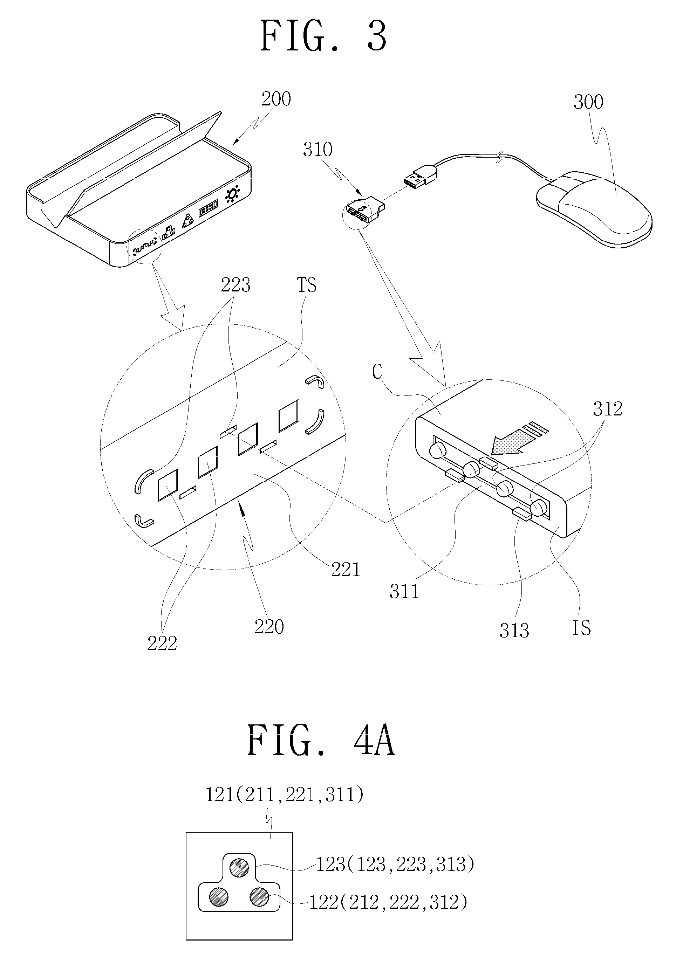

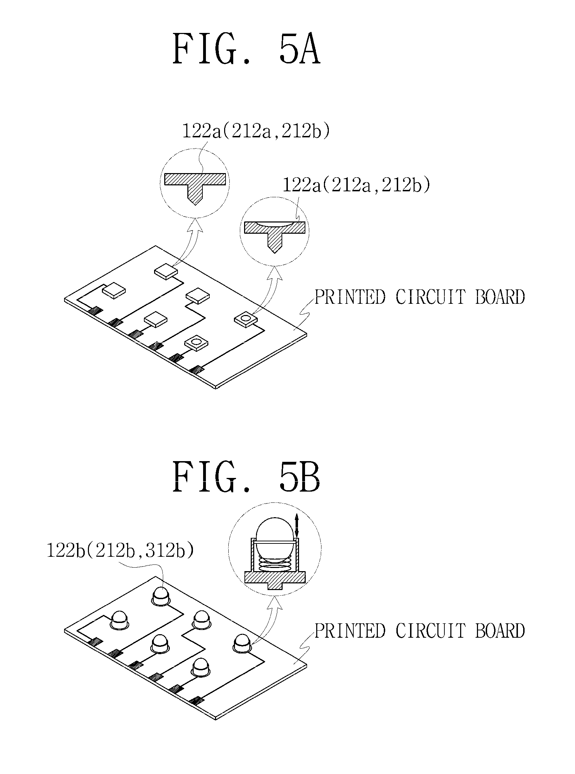

FIG. 1 is a perspective view of a tablet personal computer (PC) having a non-insertion type port and a cradle connected to the tablet PC according to an exemplary embodiment of the present invention, and FIG. 2 illustrates a state in which the tablet PC illustrated in FIG. 1 is coupled to the cradle of FIG. 1, and FIG. 3 illustrates the cradle of FIG. 1 and a peripheral device connected thereto, and FIG. 4A through 4G illustrate non-insertion type ports and non-insertion type connectors connected to the non-insertion type ports of the tablet PC, the cradle, and the peripheral device illustrated in FIGS. 1 through 3, according to various embodiments of the present invention, and FIGS. 5A through 5C illustrate contact terminals disposed on printed circuit boards (PCBs) of the non-insertion type ports and the non-insertion type connector illustrated in FIGS. 4A through 4G, according to an embodiment of the present invention.

As illustrated in FIGS. 1 through 5, a tablet PC 100 according to an exemplary embodiment of the present invention includes a keyboard connected to the tablet PC 100 using wireless communication, a touch screen configured at a body of the tablet PC 100, or an input unit that processes input signals inputted from a peripheral device 300 connected to a cradle 200 that will be described later, a display unit that displays the input signals when they are supplied to the touch screen configured at the body, a storage unit that stores the signals using a disc or memory member configured at the body when they are supplied to the storage unit, a control unit that performs an overall operation of processing or displaying the input signals or outputting the signals to the peripheral device 300 connected to the cradle 200 when the input signals are supplied to the control unit, and a non-insertion type port 120 which is electrically connected to the control unit and to which a non-insertion type connector 210 of the cradle 200 is connected using magnetism and which supplies the input signals of the peripheral device 300 connected to a non-insertion type port 220 of the cradle 200 using magnetism to the control unit or which supplies output signals of the control unit to the peripheral device 300.

Here, controlling operations of elements using the control unit in the tablet PC 100 is a well-known technology and thus a detailed description thereof will be omitted. A configuration of electrical connection between the non-insertion type port 120 of the tablet PC 100 and the non-insertion type connector 210 of the cradle 200 using magnetism and a configuration of electrical connection between the non-insertion type port 220 of the cradle 200 and a non-insertion type connector 310 for the peripheral device 300 using magnetism will be described in detail.

That is, the non-insertion type port 120 of the tablet PC 100 according to the exemplary embodiment of the present invention to which the non-insertion type connector 210 of the cradle 200 is connected using magnetism, corresponds to a conventional open type port formed at the body and is a connection port that causes the non-insertion type connector 210 of the cradle 200 to come into surface contact with a contact surface PS of at least one selected from a lower side and both sides of the body using magnetism. The non-insertion type port 120 includes a magnetic coupling member 121 that is formed on the contact surface PS of the body and comes into surface contact with a magnetic coupling member 211 formed on a contact surface CS of the non-insertion type connector 210 using magnetism, a contact terminal 122 that is formed on the contact surface PS and causes a contact terminal 212 of the non-insertion type connector 210 to come into non-insertion contact with the contact terminal 122 when the magnetic coupling members 121 and 211 are coupled to each other using magnetism, thereby enabling reciprocal power supply and data transmission, and a guide 123 that is formed on the contact surface PS and causes a guide 213 of the non-insertion type connector 210 to be guided so that non-insertion point-contact of the contact terminals 122 and 212 can be precisely performed when the magnetic coupling members 121 and 211 are coupled to each other using magnetism.

On the other hand, the non-insertion type connector 210 of the cradle 200 connected to the non-insertion type port 120 of the tablet PC 100 according to the present invention is a connector that comes into surface contact with the non-insertion type port 120 using magnetism. The non-insertion type connector 210 of the cradle 200 includes a magnetic coupling member 211 that is formed on a contact surface CS of the cradle 200 and is coupled to the magnetic coupling member 121 using magnetism, a contact terminal 212 that is formed on the contact surface CS and comes into non-insertion contact with the contact terminal 122 when the magnetic coupling members 121 and 211 are coupled to each other using magnetism, thereby enabling reciprocal power supply and data transmission, and the guide 213 that is formed on the contact surface CS and is guided by the guide 123 so that non-insertion point-contact of the contact terminals 122 and 212 can be precisely performed when the magnetic coupling members 121 and 211 are coupled to each other using magnetism.

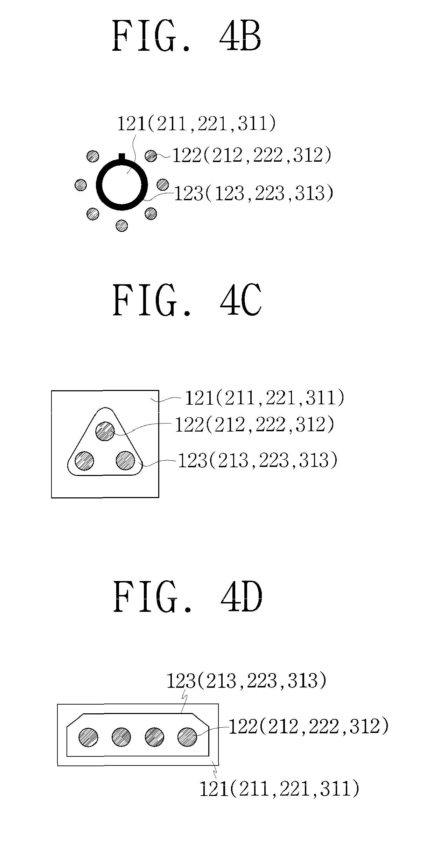

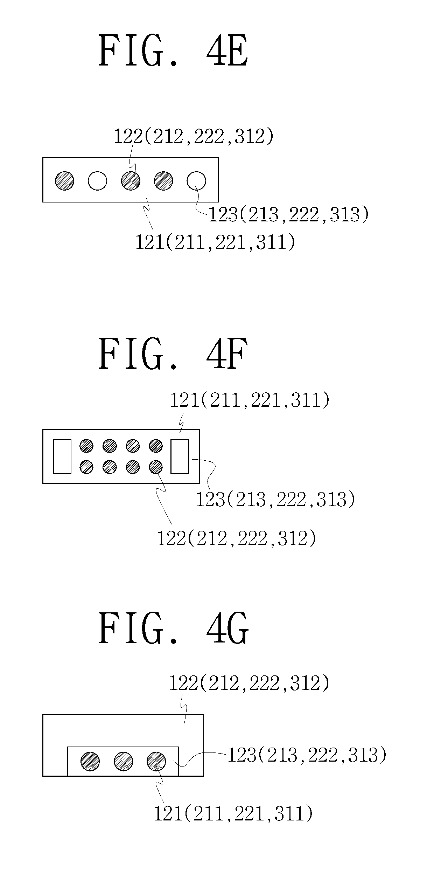

The magnetic coupling member 121 is a coupling member that is formed on the contact surface PS of the body and comes into surface contact with and is coupled to the magnetic coupling member 211 formed on the contact surface CS of the non-insertion type connector 210 using magnetism. The magnetic coupling member 121 may be placed on the contact surface PS of the body to have various shapes and areas. For example, the magnetic coupling member 121 may be provided to have an area corresponding to an area of the contact surface PS other than the contact terminal 122 and the guide 123, may be provided at one side of the contact terminal 122 and the guide 123 to have the area, or may be integrally formed with the guide 123, as illustrated in FIG. 4.

Here, the magnetic coupling members 121 and 211 may be configured as one of a magnetic member and a magnetized member. When the magnetic coupling members 121 and 211 are magnetic members, the magnetic coupling members 121 and 211 may be at least one selected from the group consisting of a magnet, an electromagnet, a permanent magnet, a monopole magnetizer, and a multi-pole magnetizer. When the magnetic coupling members 121 and 211 are magnetized members, the magnetic coupling members 121 and 211 may include metals or ferromagnetic substances that may be coupled to the magnetic members using magnetism.

Thus, when the magnetic coupling member 211 of the non-insertion type connector 210 of the cradle 200 is a magnetic member, the magnetic coupling member 121 may be a magnetic member having attraction with respect to the magnetic member or a magnetized member so that the magnetic coupling members 121 and 211 can be coupled to each other using magnetism. When the magnetic coupling member 211 is a magnetized member, the magnetic coupling member 121 may be a magnetic member so that the magnetic coupling members 121 and 211 can be coupled to each other using magnetism.

Meanwhile, when the magnetic coupling members 121 and 211 are magnets, the magnetic coupling members 121 and 211 are manufactured as vertical monopole, two-pole and four-pole magnetizers using equipment called a 'magnetizing yoke' without physically dividing the magnets so as to have various numbers of polarities, or a metal substance may be placed at at least one selected from a rear side, right and left sides, and upper and lower sides of each of the magnets so that magnetism can be improved using securing linearity of magnetism, or when the magnets are coupled to each other using magnetism, only corresponding polarities of the magnets are coupled so that, when the non-insertion type port 120 and the non-insertion type connector 310 need to come into contact with each other with directivity, contact in a reverse direction can also be prevented.

Thus, according to the magnetic coupling member 121 of the non-insertion type port 120, when the contact surface CS of the non-insertion type connector 210 comes into surface contact with the contact surface PS of the body, the magnetic coupling member 211 can be coupled to the magnetic coupling member 121 using magnetism.

The contact terminal 122 may be integrally formed on a PCB provided at an inner side of the contact surface PS using a plating method or mounted on the PCB using a shape of a pin.

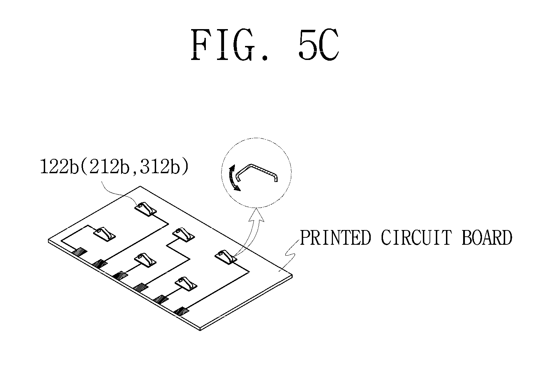

Here, the contact terminal 122 having various numbers may be disposed on the contact surface PS of the body, as illustrated in FIG. 4. Also, as illustrated in FIG. 5, the contact terminal 122 may include a planar terminal 122a, of which an end has a planar or concave surface, and an elastic terminal 122b, of which an end rebounds and is inserted into the PCB with elasticity of a spring provided inside the elastic terminal 122b or only the end bends toward the PCB with elasticity. The planar terminal 122a has a structure in which the planar terminal 122a is recessed into an inner side of a through hole formed in the contact surface PS or corresponds to a plane of the through hole, and the elastic terminal 122b has a structure in which a part of the elastic terminal 122b protrudes toward an outer side of the through hole formed in the contact surface PS.

Thus, when the contact terminal 212 of the non-insertion type connector 210 of the cradle 200 is a planar terminal 212a, the contact terminal 122 may include the elastic terminal 122b that enables reciprocal electrical contact when the contact terminal 212. When the contact terminal 212 is an elastic terminal 212b, the contact terminal 122 may be the planar terminal 122a that enables reciprocal electrical contact.

Thus, according to the contact terminal 122 of the non-insertion type port 120, the contact surface CS of the non-insertion type connector 210 elastically comes into contact with the contact surface PS of the body when the magnetic coupling members 121 and 211 for surface contact are coupled to each other using magnetism, thereby enabling power supply and data transmission between the non-insertion type port 120 and the non-insertion type connector 210.

Meanwhile, the contact terminal 122 may be formed on the PCB using various methods including assembling a material to which an electric current may be applied, i.e., the pin or an iron piece that is processed by etching and pressing, as well as the contact terminal 122 being integrally formed when a plating procedure for manufacturing the PCB is performed.

The guide 123 is a guide member that guides the guide 213 of the non-insertion type connector 210 so that, when the non-insertion type connector 210 comes into surface contact with the contact surface PS, the guide 123 can be formed on the contact surface PS and non-insertion contact between the contact terminals 122 and 212 can be precisely performed as intended when the magnetic coupling members 121 and 211 are coupled to each other using magnetism. The guide 123 may be placed on the contact surface PS of the body to have various shapes and areas. For example, as illustrated in FIG. 4, the guide 123 may be formed to cover a plurality of contact terminals 122 with one group, or to include the magnetic coupling member 121 in a position of the contact surface PS, or one or a plurality of contact terminals 122 may be independently performed in the position of the contact surface PS.

Here, the guide 123 may be formed as one of an embossed guide that protrudes from the contact surface PS and an intagliated guide that is recessed into the contact surface PS. When the guide 213 of the non-insertion type connector 210 of the cradle 200 is an embossed guide, the guide 123 may be formed as an intagliated guide so that reciprocal insertion and combination can be performed. When the guide 213 of the non-insertion type connector 210 is an intagliated guide, the guide 123 may be formed as an embossed guide so that reciprocal insertion and combination can be performed. Thus, when the non-insertion type port 120 and the non-insertion type connector 210 need to come into contact with each other with directivity, contact in a reverse direction can also be prevented.

Thus, the guide 123 of the non-insertion type port 120 guides the guide 213 of the non-insertion type connector 210 so that, when the non-insertion type connector 210 comes into surface contact with the contact surface PS, non-insertion contact between the contact terminals 122 and 212 can be precisely performed as intended when the magnetic coupling members 121 and 211 are coupled to each other using magnetism. Thus, the non-insertion type connector 210 can be prevented from being unintentionally separated from a contact portion and simultaneously, the contact terminals 122 and 212 can be prevented from coming into contact with each other in the reverse direction according to shapes.

Meanwhile, the guide 123 may also be formed on the contact surface PS to correspond to the exterior of a case C on the contact surface CS of the non-insertion type connector 210. Thus, the contact surface CS of the non-insertion type connector 210 may be precisely placed on the contact surface PS of the non-insertion type port 120.

Thus, according to the non-insertion type port 120, the non-insertion type connector 210 of the cradle 200 is guided toward the non-insertion type port 120, comes into surface contact with the non-insertion type port 120 using magnetism and simultaneously, the contact terminals 122 and 212 come into non-insertion contact with each other. Thus, the non-insertion type port 120 can be easily connected to or separated from the non-insertion type connector 210, and unstable connection of terminals and damage of components that are conventional problems can be prevented.

Meanwhile, in the cradle 200 according to the exemplary embodiment of the present invention, the non-insertion type port 220 is configured at a contact surface TS, to be internally connected to the non-insertion type connector 210 so that power supply and data transmission can be performed, and to cause the non-insertion type connector 310 of the peripheral device 300, such as a mouse or printer, to come into non-insertion contact with the non-insertion type port 220 using magnetism.

Here, when the non-insertion type port 220 has various ports, such as a port for power supply, a port for a universal serial bus (USB), a port for HDMi, a port for a wired modem, and a port for a speaker (or an earphone), the non-insertion type port 220 corresponds to the ports and is a connection port that causes the non-insertion type connector 310 of the peripheral device 300 to come into surface contact with the contact surface TS of the cradle 200 using magnetism. The non-insertion type port 220 includes a magnetic coupling member 221 that is formed on the contact surface TS of the cradle 200 and comes into surface contact with a magnetic coupling member 311 formed on a contact surface IS of a non-insertion type connector 310 using magnetism, a contact terminal 222 that is formed on the contact surface TS and causes a contact terminal 312 of the non-insertion type connector 310 to come into non-insertion contact with the contact terminal 222 when the magnetic coupling members 221 and 311 are coupled to each other using magnetism, thereby enabling reciprocal power supply and data transmission, and a guide 223 that is formed on the contact surface TS and causes a guide 313 of the non-insertion type connector 310 to be guided so that non-insertion point-contact of the contact terminals 222 and 312 can be precisely performed when the magnetic coupling members 221 and 311 are coupled to each other using magnetism.

Meanwhile, the non-insertion type connector 310 of the peripheral device 300 connected to the non-insertion type port 220 of the cradle 200 according to the present invention is a connector that comes into surface contact with the non-insertion type port 220 using magnetism. The non-insertion type connector 310 of the peripheral device 300 includes a magnetic coupling member 311 that is formed on the contact surface IS of the case C and is coupled to the magnetic coupling member 221 using magnetism, a contact terminal 312 that is formed on the contact surface IS and comes into non-insertion contact with the contact terminal 222 when the magnetic coupling members 221 and 311 are coupled to each other using magnetism, thereby enabling reciprocal power supply and data transmission, and the guide 313 that is formed on the contact surface IS and is guided by the guide 223 so that non-insertion point-contact of the contact terminals 222 and 312 can be precisely performed when the magnetic coupling members 221 and 311 are coupled to each other using magnetism.

Here, the non-insertion type port 220 of the cradle 200 and the non-insertion type connector 310 for the peripheral device 300 may be configured to be the same as or similar to the non-insertion type port 120 of the tablet PC 100 and the non-insertion type connector 210 of the cradle 200 described above. Thus, detailed descriptions thereof will be omitted.

Thus, the magnetic coupling member 221, the contact terminal 222, and the guide 223 of the non-insertion type port 220 and the magnetic coupling member 311, the contact terminal 312, and the guide 313 of the non-insertion type connector 310 are configured so that their reciprocal opposed configurations, i.e., a magnetic member and a magnetized member, a planar terminal and an elastic terminal, and an embossed guide and an intagliated guide may correspond to each one configuration. Thus, the non-insertion type port 220 and the non-insertion type connector 310 may face each other and may be coupled to each other so that power supply and data transmission between the cradle 200 and the peripheral device 300 can be performed.

In this case, the magnetic coupling members 221 and 311 may be provided at both or either of the non-insertion type port 220 and the non-insertion type connector 310.

Also, the non-insertion type connector 310 may be configured as a gender type that is separately connected to a terminal of an existing connector of the peripheral device 300 or an integral type that is connected directly to an end of an electric wire of the peripheral device 300 instead of the existing connector. When the non-insertion type connector 310 is formed as the gender type, the non-insertion type connector 310 may be configured in various shapes in which an existing terminal is fully accommodated and covered or is inserted into a rear side of the case C. The gender type non-insertion type connector 310 may be connected to the case C via a loss prevention unit, such as a loop that is provided at the electric wire of the peripheral device 300, so as to prevent losses.

Meanwhile, in the present invention, when each of the non-insertion type connectors 210 and 310 comes into surface contact with each of the non-insertion type ports 120 and 220, contact surfaces are guided by each of the guides 223 and 313. However, it is obvious to one of ordinary skill in the art that the above-described function can be performed through embossing and intaglio operations of the magnetic coupling members 221 and 311. Thus, a detailed description thereof will be omitted.

Hereinafter, operations and effects of the tablet PC 100 having the non-insertion type port 120 and the cradle 200 connected thereto illustrated in FIG. 1 will be described.

First, when the non-insertion type port 120 formed on the tablet PC 100 comes into surface contact with the non-insertion type connector 210 of the cradle 200, the guide 213 of the non-insertion type connector 210 is guided by the guide 123 of the non-insertion type port 120 so that the magnetic coupling members 121 and 211 configured at the non-insertion type port 120 and the non-insertion type connector 210 can be coupled to each other using magnetism. As a result, the contact terminals 122 and 212 configured at the non-insertion type port 120 and the non-insertion type connector 210 come into electrical contact with each other so that the non-insertion type port 120 can be easily connected to or separated from the non-insertion type connector 210. Also, conventional problems that occur when contact terminals have unstable connection states due to the long usage, can be prevented.

Meanwhile, enabling power supply and data transmission through surface contact between the non-insertion type connector 310 for the peripheral device 300 and the non-insertion type port 220 formed at the cradle 200 is the same as or similar to a method of enabling power supply and data transmission through surface contact between the non-insertion type port 120 formed at the tablet PC 100 and the non-insertion type connector 210 of the cradle 200. As a result, the non-insertion type port 220 can be easily connected to or separated from the non-insertion type connector 310. Also, conventional problems that occur when contact terminals have unstable connection states due to the long usage, can be prevented.

Thus, according to the present invention described above, a non-insertion type port instead of an open type port is configured at a tablet PC, and a non-insertion type connector of a cradle comes into non-insertion contact with the non-insertion type port using magnetism so that the cradle can be more conveniently and firmly connected to the tablet PC while maintaining a stable contact state.

In addition, the non-insertion type port of the tablet PC is provided to have a sense of sealing at a contact portion, unlike a conventional open type port, so that aesthetic appeal of the tablet PC can be improved and simultaneously foreign substances can be prevented from being inserted into the open type port.

Furthermore, a non-insertion type connector of a peripheral device comes into non-insertion contact with a non-insertion type port of the cradle using magnetism so that the peripheral device can be more conveniently and firmly connected to the cradle while maintaining a stable contact state.

While the present invention has been particularly shown and described with reference to exemplary embodiments thereof, it will be understood by those of ordinary skill in the art that various changes in form and details may be made therein without departing from the spirit and scope of the present invention as defined by the following claims.

### INDUSTRIAL APPLICABILITY

According to the present invention, a non-insertion type port instead of an open type port is configured at a tablet PC, and a non-insertion type connector of a cradle comes into non-insertion contact with the non-insertion type port using magnetism so that the cradle can be more conveniently and firmly connected to the tablet PC while maintaining a stable contact state.

In addition, the non-insertion type port of the tablet PC is provided to have a sense of sealing at a contact portion, unlike a conventional open type port, so that aesthetic appeal of the tablet PC can be improved and simultaneously foreign substances can be prevented from being inserted into the open type port.

Furthermore, a non-insertion type connector of a peripheral device comes into non-insertion contact with a non-insertion type port of the cradle using magnetism so that the peripheral device can be more conveniently and firmly connected to the cradle while maintaining a stable contact state.

## Claims

1. A tablet personal computer (PC) having a non-insertion type port, the tablet PC comprising a non-insertion type port (120) to which a non-insertion type connector (210) of a cradle (200) is connected using magnetism and which supplies input signals of a peripheral device (300) connected to a non-insertion type port (220) of the cradle (200) using magnetism to a control unit or which supplies output signals of the control unit to the peripheral device (300),
wherein the non-insertion type port (120) comprises:
a magnetic coupling member (121) that is formed on a contact surface (PS) of a body and comes into surface contact with a magnetic coupling member (211) formed on a contact surface (CS) of the non-insertion type connector (210) using magnetism; and
a contact terminal (122) that is formed on the contact surface (PS) and causes a contact terminal (212) of the non-insertion type connector (210) to come into non-insertion contact with the contact terminal (122) when the magnetic coupling members (121) and (211) are coupled to each other using magnetism, thereby enabling reciprocal power supply and data transmission.

2. The tablet PC of claim 1, wherein the non-insertion type port (120) further comprises a guide (123) that is formed on the contact surface (PS) and causes a guide (213) of the non-insertion type connector (210) to be guided so that non-insertion point-contact of the contact terminals (122) and (212) can be precisely performed when the magnetic coupling members (121) and (211) are coupled to each other using magnetism.

3. The tablet PC of claim 1, wherein the magnetic coupling member (121) is configured as one of a magnetic member and a magnetized member, and when the magnetic coupling member (121) is a magnetic member, the magnetic coupling member (121) comprises at least one selected from the group consisting of a magnet, an electromagnet, and a permanent magnet, and when the magnetic coupling member (121) is a magnetized member, the magnetic coupling member (121) comprises a metal or ferromagnetic substance that is capable of being coupled to the magnetic member using magnetism.

4. The tablet PC of claim 1, wherein the contact terminal (122) is configured as one of a planar terminal (122a), of which an end has a planar or concave surface, and an elastic terminal (122b), of which an end has elasticity of a spring provided inside the elastic terminal (122b) or only the end bends toward a printed circuit board (PCB) with elasticity, and
the planar terminal (122a) has a structure in which the planar terminal (122a) is recessed into an inner side of a through hole formed in the contact surface (PS) or corresponds to a plane of the through hole, and
the elastic terminal (122b) has a structure in which a part of the elastic terminal (122b) protrudes toward an outer side of the through hole formed in the contact surface (PS).

5. The tablet PC of claim 2, wherein the guide (123) is formed as one of an embossed guide that protrudes from the contact surface (PS) and an intagliated guide that is recessed into the contact surface (PS).

6. The tablet PC of claim 3, wherein, when the magnetic coupling member (121) is a magnet, the magnetic coupling member (121) is manufactured using at least one method selected from the group consisting of vertical monopole, two-pole and four-pole magnetizers using equipment called a 'magnetizing yoke'.

7. A cradle that is connected to a tablet personal computer (PC) (100) having a non-insertion type port (120) including a magnetic coupling member (121) and a contact terminal (122) on a contact surface (PS) using magnetism, the cradle comprising a non-insertion type connector (210) that is formed on a contact surface (CS) of a body and causes the non-insertion type port (120) to come into non-insertion contact with the non-insertion type connector (210) using magnetism,
wherein the non-insertion type connector (210) comprises:
a magnetic coupling member (211) that is coupled to the magnetic coupling member (121) using magnetism; and
a contact terminal (212) that comes into non-insertion contact with the contact terminal (122) when the magnetic coupling members (121) and (211) are coupled to each other using magnetism.

8. The cradle of claim 7, wherein, when the non-insertion type port (120) comprises a guide (123) formed on the contact surface (PS), the non-insertion type connector (210) further comprises a guide (213) that is formed on the contact surface (PS) and is guided by the guide (123) so that non-insertion point-contact of the contact terminals (122) and (212) can be precisely performed when the magnetic coupling members (121) and (211) are coupled to each other using magnetism.

9. The cradle of claim 7, wherein the magnetic coupling member (211) is configured as one of a magnetic member and a magnetized member, and when the magnetic coupling member (211) is a magnetic member, the magnetic coupling member (211) comprises at least one selected from the group consisting of a magnet, an electromagnet, and a permanent magnet, and when the magnetic coupling member (211) is a magnetized member, the magnetic coupling member (211) comprises a metal or ferromagnetic substance that is capable of being coupled to the magnetic member using magnetism.

10. The cradle of claim 7, wherein the contact terminal (212) is configured as one of a planar terminal (212a), of which an end has a planar or concave surface, and an elastic terminal (212b), of which an end has elasticity of a spring provided inside the elastic terminal (212b) or only the end bends toward a printed circuit board (PCB) with elasticity, and
the planar terminal (212a) has a structure in which the planar terminal (212a) is recessed into an inner side of a through hole formed in the contact surface (CS) or corresponds to a plane of the through hole, and
the elastic terminal (212b) has a structure in which a part of the elastic terminal (212b) protrudes toward an outer side of the through hole formed in the contact surface (CS).

11. The cradle of claim 8, wherein the guide (213) is formed as one of an embossed guide that protrudes from the contact surface (PS) and an intagliated guide that is recessed into the contact surface (CS).

12. The cradle of claim 7, further comprising a non-insertion type port (220) that is formed on a contact surface (TS) to be internally connected to the non-insertion type connector (210) so that power supply and data transmission can be performed, and to cause the non-insertion type connector (310) of the peripheral device (300) to come into non-insertion contact with the non-insertion type port (220) using magnetism,
wherein the non-insertion type port (220) comprises:
a magnetic coupling member (221) that is formed on the contact surface (TS) and comes into surface contact with the magnetic coupling member (311) formed on a contact surface (IS) of the non-insertion type connector (310) using magnetism; and
a contact terminal (222) that is formed on the contact surface (TS) and causes a contact terminal (312) of the non-insertion type connector (310) to come into non-insertion contact with the contact terminal (222) when the magnetic coupling members (221) and (311) are coupled to each other using magnetism, thereby enabling reciprocal power supply and data transmission.

13. The cradle of claim 12, wherein the non-insertion type port (220) further comprises a guide (223) that is formed on the contact surface (TS) and causes a guide (313) of the non-insertion type connector (310) to be guided so that non-insertion point-contact of the contact terminals (222) and (312) can be precisely performed when the magnetic coupling members (221) and (311) are coupled to each other using magnetism.

14. The cradle of claim 12, wherein the magnetic coupling member (221) is configured as one of a magnetic member and a magnetized member, and when the magnetic coupling member (221) is a magnetic member, the magnetic coupling member (221) comprises at least one selected from the group consisting of a magnet, an electromagnet, and a permanent magnet, and when the magnetic coupling member (221) is a magnetized member, the magnetic coupling member (221) comprises a metal or ferromagnetic substance that is capable of being coupled to the magnetic member using magnetism.

15. The cradle of claim 12, wherein the contact terminal (222) is configured as one of a planar terminal (222a), of which an end has a planar or concave surface, and an elastic terminal (222b), of which an end has elasticity of a spring provided inside the elastic terminal (222b) or only the end bends toward a PCB with elasticity, and
the planar terminal (222a) has a structure in which the planar terminal (222a) is recessed into an inner side of a through hole formed in the contact surface (TS) or corresponds to a plane of the through hole, and
the elastic terminal (222b) has a structure in which a part of the elastic terminal (222b) protrudes toward an outer side of the through hole formed in the contact surface (TS).

16. The cradle of claim 13, wherein the guide (223) is formed as one of an embossed guide that protrudes from the contact surface (TS) and an intagliated guide that is recessed into the contact surface (TS).

17. The cradle of claim 14, wherein, when the magnetic coupling member (221) is a magnet, the magnetic coupling member (221) is manufactured using at least one method selected from the group consisting of vertical monopole, two-pole and four-pole magnetizers using equipment called a 'magnetizing yoke'.
